# EUROPEAN PATENT SPECIFICATION

(11) **EP 0 673 210 B1**
(45) Date of publication and mention of the grant of the patent: **11.06.1997**
(21) Application number: 94903141.3
(22) Date of filing: 08.12.1993
(51) Int. Cl.: A23L 1/32, A23L 1/015

(54) **A PROCESS FOR REMOVING $g(b)-CICLODEXTRIN FROM EGG YOLK OR EGG YOLK PLASMA**
VERFAHREN ZUR ENTFERNUNG VON BETA-CYCLODEXTRIN AUS EIGELB ODER EIGELBPLASMA
PROCEDE POUR ELIMINER LES $g(b)-CYCLODEXTRINES DES JAUNES D'OEUF OU DU PLASMA DE JAUNES D'OEUF

(30) Priority: 09.12.1992 NL 9202130
(43) Date of publication of application: 27.09.1995
(73) Proprietor: B.V. NEDERLANDSE INDUSTRIE VAN EIPRODUKTEN, NL-8071 DA Nunspeet (NL)
(72) Inventor: ROS, Albert Jacobus, NL-3843 AK Harderwijk (NL); VAN PANHUIS, Gijsbertus, NL-3849 NM Hierden (NL)
(74) Representative: Smulders, Theodorus A.H.J., Ir.
(86) International application number: NL9300263
(87) International publication number: WO9413158

(56) References cited:
- EP-A- 0 439 075
- EP-A- 0 492 475
- FR-A- 2 657 623
- US-A- 5 141 859
- DATABASE WPI Section Ch, Week 9019, 1990 Derwent Publications Ltd., London, GB; Class D, AN 90-144908 & JP,A,2 092 296 (TOWA KASEI KOGYO KK) 3 April 1990
- DATABASE WPI Section Ch, Week 8045, 1980 Derwent Publications Ltd., London, GB; Class D, AN 80-79860C & JP,A,55 124 494 (HAYASHIBARA BIOCHEM) 26 September 1980
- PATENT ABSTRACTS OF JAPAN vol. 008, no. 134 (C-230)21 June 1984 & JP,A,59 044 318 (AIKEN KAGAKU KOGYO) 12 March 1984
- TIBTECH vol. 7, no. 1 , 1989 , CAMBRIDGE U.K. pages 2 - 4 R. BAR 'CYCLODEXTRIN-AIDED BIOCONVERSIONS AND FERMENTATIONS'

## Description

This invention relates to a process for removing β-cyclodextrin from egg yolk or egg yolk plasma using an α-amylase.

In 1990, the World Health Organisation of the United Nations specified a standard for the maximum daily intake of cholesterol in its report 797 entitled "Diet, nutrition and the prevention of chronic diseases". The recommended maximum intake is 300 mg cholesterol per day per person. In the industrialized countries, the average cholesterol intake is approximately twice as high.

Heretofore, a large number of procedures have been proposed to reduce cholesterol contents. These procedures can be divided into two groups: processes in which cholesterol is broken down and processes in which cholesterol is extracted.

Examples of breakdown processes include degradation by microorganisms, conversion by means of enzymes, and chemical conversion. Cholesterol extraction can be carried out in the form of solvent extraction, by evaporation processes, and by adsorption to a fixed bed. It will be clear, however, that not all of these procedures can be applied to every cholesterol-containing foodstuff without any problem.

It is generally known that eggs, and in particular egg yolks, contain a high percentage of cholesterol. For this reason, doctors advise patients who have a high cholesterol level in the blood to refrain from the consumption of eggs and egg products.

EP-A-0 326 469 discloses a process for removing steroidal compounds from substances of biological origin, such as eggs and fats. If the biological substance is not present in liquid form, it is first liquefied. The liquid substance to be treated is contacted with β-cyclodextrin in an aqueous environment. β-Cyclodextrin is a cyclic oligomer consisting of seven α-D-dextrose units which are bound to each other via 1,4-α-glucosidic bonds. This cyclic oligomer has a hydrophobic central opening which makes it possible to bind particular lipophilic substances, such as cholesterol, into a complex. The complex formed can subsequently be removed from the treated substance, such as egg yolk, in a simple manner, for instance by means of centrifugation. What remains is a product whose cholesterol content has been reduced by 70-95%.

This extraction is highly selective when applied to diluted egg yolk. Cholesterol and free fatty acids are complexed, while useful lipophilic compounds such as vitamin A and vitamin D remain behind in the product.

A disadvantage arising in the removal of the β-cyclodextrin-cholesterol-complex from egg yolk is that approx. 0.5-2% of β-cyclodextrin remains behind in the egg yolk. The residual β-cyclodextrin does not fulfil any useful function and may therefore be regarded as ballast. It is endeavoured to have as few of such substances as possible present in foodstuffs.

Accordingly, there is a need to reduce the β-cyclodextrin content of egg yolk or egg yolk plasma to below 20 ppm, so that, foodstuff-technically, the substance involved can be merely qualified as a processing aid.

EP-A-0 439 075 and EP-A-0 492 475 relate to a process for reducing β-cyclodextrin to glucose in egg yolk or egg yolk plasma. To that end, egg yolk or egg yolk plasma is mixed with an α-amylase selected from domestic hog pancreas amylase and α-amylases formed by or derived from Aspergillus niger, Aspergillus oryzae, Bacillus polymyxa, Bacillus coagulans and Flavobacterium sp.

Referring to the literature in the art, EP-A-0 439 075 mentions that cyclodextrins typically inhibit α- and β-amylases and are substantially resistant to these enzymes. A number of the α-amylases used in the process according to EP-A-0 439 075 were known to break down cyclodextrins only at a very low rate. However, if these enzymes were added to egg yolk treated with β-cyclodextrins, these cyclodextrins were broken down relatively rapidly and completely.

According to this known process, a diluted aqueous egg yolk or egg yolk plasma solution is adjusted to a pH of between 4.5 and 6 with an edible acid, for instance citric acid. Subsequently, one of the specific α-amylases mentioned in EP-A-0 439 075 is added to the diluted egg yolk or egg yolk plasma. The α-amylase is incubated at a temperature of between 5° and 65°C for 2-50 hours.

The α-amylase is added in an amount of 10-500 FAU per gram of β-cyclodextrin to be removed. A FAU (Fungal α-Amylase Unit) is a measure for the activity of an α-amylase originating from a fungus, and this measure is used by Novo Industri A/S, Copenhagen, Denmark, for instance for the enzyme Fungamyl®. More particularly, 1 FAU is the amount of α-amylase originating from a fungus which breaks down 5.25 g starch in 1 hour under standard conditions. These standard conditions are: starch in the form of liquid starch, an incubation time of 7-20 minutes, 37°C and pH 4.7. It is not advisable to use an amount of enzyme in excess of the 10-500 FAU specified, because this does not give any better activity. Although, according to EP-A-0 439 075, efforts are made to reduce the β-cyclodextrin content to below 100 ppm, such efforts are only successful, as appears from the Examples, if Fungamyl® (α-amylase from A. orizae, marketed by Novo Industri A/S, Copenhagen, Denmark) is used. If other amylases are used, more than 800 ppm of β-cyclodextrin remains behind in the treated solution. It is further noted that the European patent application mentioned does not indicate any relation which makes it possible to relate the FAU unit to α-amylases which do not originate from fungi, such as the α-amylases from Bacillus sp., Flavobacterium sp and domestic hog pancreas amylase.

It has now been found that β-cyclodextrin can also be broken down with a maltogenic α-amylase originating from Bacillus stearothermophilus.

The present invention relates to a process for removing β-cyclodextrin from egg yolk or egg yolk plasma using an α-amylase, this process being characterized in that the egg yolk or egg yolk plasma is treated with a maltogenic α-amylase originating from Bacillus stearothermophilus.

The use of this maltogenic α-amylase now makes it possible to break down β-cyclodextrin substantially completely in a short time under conditions which are favourable for egg yolk. Depending on the reaction conditions, the reaction time will be, for instance, between 10 minutes and 2 hours. By the term "favourable for egg yolk" is meant that the functional properties of the egg yolk or egg yolk plasma are not adversely affected. It is known that egg yolk is a very delicate product. It can only be pasteurized at a temperature of 63°C at a maximum for 6 minutes. When the pasteurization takes more time or is carried out at a higher temperature, the functional properties of the egg yolk components are affected. It is further known that if the pH is reduced to below 5.8 at an increased temperature of approximately 40°C or more, thickening arises due to coagulation of certain components.

With the enzyme that is used according to the present invention, the treatment can be carried out in the temperature range of 45°C to 63°C and at a pH ranging between 5.8 and 7.0. If a temperature lower than 45°C is used, the breakdown of β-cyclodextrin is still possible but takes more than 2 hours. Preferably, the temperature varies between 55°C and 63°C, because at these temperatures the egg yolk product can be pasteurized at the same time. In contrast with the α-amylases which are used according to EP-A-0 439 075, the α-amylase from B. stearothermophilus is not inactivated at pasteurization temperatures. The preferred pH range is between 6.0 and 6.8.

If the β-cyclodextrin degradation is combined with a pasteurization of the egg yolk product, the α-amylase can be added to the egg yolk product before heating for pasteurization begins. During the careful heating of the egg yolk product to a temperature of approximately 60°C, the enzyme used can break down the β-cyclodextrin. After being maintained at 60°C for a short time, the product can subsequently be cooled. Thus, a pasteurized egg yolk product is obtained, in which the presence of β-cyclodextrin can no longer be demonstrated.

For egg yolk, the conditions specified are much milder than the conditions described in EP-A-0 439 075, where, as specified, treatment times are much longer (2-50 hours) at a temperature of up to 65°C and at a considerably more acidic pH of between 4.5 and 6. For the reasons outlined, the process according to the present invention has great advantages over the process according to EP-A-0 439 075.

In a preferred embodiment, in the process according to the present invention, the maltogenic α-amylase used is Maltogenase®. Maltogenase is the maltogenic α-amylase from Bacillus stearothermophilus which has been expressed and produced by a Bacillus subtilis strain. This product is marketed by Novo Industri A/S, Copenhagen, Denmark. Maltogenase is officially approved for use in foodstuffs.

Using the process according to the present invention, the β-cyclodextrin is broken down into glucose and maltose. The presence of these sugars in an egg product does not cause any problems with respect to official food regulations. More in particular, the heat-stable maltogenic α-amylase hydrolyses the 1,4-α-glucosidic compounds in cyclodextrin.

As stated above, β-cyclodextrin can be rapidly broken down by the maltogenic α-amylase from B. stearothermophilus under favourable conditions for egg yolk. The breakdown occurs rapidly, notwithstanding the fact that the optimum pH for this enzyme is 5.3. β-Cyclodextrin is broken down completely within 2 hours if more than 60 MANU α-amylase according to the invention is used. A MANU (Maltogenic Amylase Novo Unit) is the amount of enzyme that breaks down 1 µmol maltotriose per minute under standard conditions. These standard conditions are: a substrate concentration of 10 mg/ml, a temperature of 37°C, a pH of 5.0 and an incubation time of 30 minutes. In contrast with an observation to the contrary in EP-A-0 439 075, better, more rapid conversion is achieved if a larger amount of α-amylase is used. In most cases, however, a conversion time of 2 hours will not be objectionable. Accordingly, it will suffice to use an amount of about 60 MANU per ml substrate.

The maltogenic α-amylase which is used in accordance with the present invention, and Maltogenase in particular, are approved for use in the food industry.

Maltogenase is difficult to remove from the substrate or to inactivate. Due to the thermostability of this enzyme, it is impossible to inactivate it by increasing the temperature without adversely affecting the quality of the egg yolk. Nor is this enzyme inactivated after prolonged incubation at pH 8.3 or after a treatment with hydrogen peroxide. It did prove to be possible to remove Maltogenase with modified starch, for instance Perfectamyl®, AVEBE B.A., Foxhol, the Netherlands.

If it is desired that as much enzyme as possible be removed from the treated product, the enzyme can be bound to a suitable support, for instance Eupergit®C.

Eupergit®C is supplied by Röhm Pharma GmbH, Darmstadt, Germany. This material consists of oxirane-acrylic beads having an average diameter of 150 µm.

Other suitable supports are Sepharose® (agarose), Sephadex® (dextrose), cellulose, starch and supports based on glass and silicone.

However, because α-amylase is partly inactivated by immobilization on the support, a considerably larger amount of enzyme is required to break down all of the β-cyclodextrin within 2 hours. This is not a problem, however, because the supported enzyme is reusable. During incubation, less than 1% of the α-amylase is released from the support.

It is further observed that EP-A-0 415 287 discloses a process in which β-cyclodextrin is used as a solid adsorption agent for the removal of cholesterol. This process, however, is complicated. The use of a supported enzyme for removing β-cyclodextrin is not suggested in that application.

Finally, the present invention relates to low-cholesterol egg yolk or egg yolk plasma obtained by the use of the process according to the present invention. Substantially no β-cyclodextrin is present in this product anymore. This product can be used in the same way as egg yolk having a normal cholesterol content.

The present invention will now be illustrated in and by the following Examples.

### Example 1

To 3 ml 20 mM phosphate buffer, pH 6.4, with 18 wt.% egg yolk powder, which contained approximately 2 wt.% β-cyclodextrin, was added 0.5 ml of a 2 mM potassium phosphate buffer, pH 6.4, into which 60 MANU/ml Maltogenase® had been incorporated. This mixture was incubated at 45°C and after 2 h the enzyme reaction was terminated by heating the mixture at 100°C for 10 min.

The β-cyclodextrin content of the treated egg yolk product was determined using HPLC. The HPLC analysis was carried out with a Benson BCX4 cation exchanger in the calcium form (particle size 15-20 µm, column 250 x 9 mm), with 100 ppm Ca-EDTA as mobile phase, a flow rate of 0.4 ml/min, a column temperature of 85°C and a sample size of 20 µl. The index of refraction of the eluted material was measured with a Jasco 830-RI detector at 40°C and registered with a SP4400 Chromjet integrator of Spectra Physics at a paper rate of 2.5 mm/min. No β-cyclodextrin was demonstrated.

### Example 2

The procedure according to Example 1 was repeated. Now, however, incubation occurred at 60°C and the enzyme reaction was ended after 30 min. β-Cyclodextrin was no longer demonstrated.

### Example 3

Maltogenase® was bound to Eupergit®C in accordance with the directions of the manufacturer. To that end, 73 ml of this enzyme, having a total enzyme content of 8.2 g/l, was dialysed at 4°C for 18 h against 2 volumes of 2 liters of 0.1 M potassium monohydrogen phosphate buffer, pH 7.5, and subsequently for 5 h against 2 volumes of 2 liters of 1 M potassium monohydrogen phosphate buffer, pH 7.5, with 0.05% p-hydroxybenzoic acid methyl ester. 17 g Eupergit®C was added to the dialysed solution. This mixture was incubated at room temperature for 70 h. The solution was then filtered using a P2 glass filter. The Eupergit®C was washed with 0.1 M potassium monohydrogen phosphate buffer, pH 7.5. It was found that 45% of the originally added protein was still present in the filtrate, i.e., per gram Eupergit®C, 19 mg Maltogenase had been immobilized.

1.0 g Maltogenase-Eupergit was added to 6 ml 20 mM phosphate buffer, pH 6.4, with 18 wt.% egg yolk powder, which contained β-cyclodextrin. After incubation with revolving at 45°C for 2 h, the supported enzyme was removed by centrifugation (5 min, 900 g). 4 ml of the remaining egg yolk solution was incubated at 100°C for 10 min in order to inactivate any enzyme present. It was found that all of the β-cyclodextrin in this solution had been broken down.

The Maltogenase-Eupergit removed by centrifugation was washed 3 times with 8 ml phosphate buffer, pH 7.5. This washed material was added to 8 ml of a similar egg yolk powder solution and incubated again at 45°C for 2 h. After centrifugation, the cyclodextrin content was determined again. It was found that the activity of the Eupergit beads with Maltogenase thereon was high enough to break down all of the β-cyclodextrin.

## Claims

1. A process for removing β-cyclodextrin from egg yolk or egg yolk plasma using an α-amylase, characterized in that the egg yolk or egg yolk plasma is treated with a maltogenic α-amylase originating from Bacillus stearothermophilus.

2. A process according to claim 1, characterized in that the maltogenic α-amylase used is Maltogenase®.

3. A process according to claim 1 or 2, characterized in that it is carried out at a temperature of between 45 and 63°C.

4. A process according to claim 3, characterized in that the temperature is set between 55 and 63°C.

5. A process according to any one of the preceding claims, characterized in that it is carried out at a pH ranging from 5.8 to 7.0.

6. A process according to claim 5, characterized in that the pH is adjusted to between 6.0 and 6.8.

7. A process according to any one of the preceding claims, characterized in that the α-amylase is immobilized on a support material.

8. A process according to claim 7, characterized in that the support material used is Eupergit®.

## Patentansprüche

1. Verfahren zur Entfernung von β-Cyclodextrin aus Eidotter oder Eidotterplasma unter Verwendung einer α-Amylase, dadurch gekennzeichnet, daß das Eidotter oder Eidotterplasma mit einer maltogenen α-Amylase behandelt wird, die aus *Bacillus stearothermophilus* stammt.

2. Verfahren gemäß Anspruch 1, dadurch gekennzeichnet, daß es sich bei der verwendeten maltogenen α-Amylase um Maltogenase® handelt.

3. Verfahren gemäß Anspruch 1 oder 2, dadurch gekennzeichnet, daß es bei einer Temperatur zwischen 45 und 63°C durchgeführt wird.

4. Verfahren gemäß Anspruch 3, dadurch gekennzeichnet, daß die Temperatur zwischen 55 und 63°C eingestellt wird.

5. Verfahren gemäß einem der vorstehenden Ansprüche, dadurch gekennzeichnet, daß es bei einem pH-Wert im Bereich von 5,8 bis 7,0 durchgeführt wird.

6. Verfahren gemäß Anspruch 5, dadurch gekennzeichnet, daß der pH-wert zwischen 6,0 und 6,8 eingestellt wird.

7. Verfahren gemäß einem der vorstehenden Ansprüche, dadurch gekennzeichnet, daß die α-Amylase auf einem Trägermaterial immobilisiert ist.

8. Verfahren gemäß Anspruch 7, dadurch gekennzeichnet, daß es sich bei dem verwendeten Trägermaterial um Eupergit® handelt.

## Revendications

1. Procédé de séparation de β-cyclodextrine de jaune d'oeuf ou de plasma de jaune d'oeuf au moyen d'une α-amylase, caractérise en ce que le jaune d'oeuf ou plasma de jaune d'oeuf est cité pu une α-amylase maltogène provenant de Bacillus stearothermophilus.

2. Procédé selon la revendication 1, caractérisé en ce que l'α-amylase maltogène utilisée est de la Maltogenase®.

3. Procédé selon la revendication 1 ou 2, caractérisé en ce qu'il est mis en oeuvre à une température comprise entre 45 et 63°C.

4. Procédé selon la revendication 3, caractérisé en ce que la température est réglée entre 55 et 63°C.

5. Procédé selon l'une quelconque des revendications précédentes. caractérisé en ce qu'il est mis en oeuvre à un pH compris entre 5,8 et 7,0.

6. Procédé selon la revendication 5, caractérisé en ce que le pH est ajusté à une valeur comprise entre 6,0 et 6,8.

7. Procédé selon l'une quelconque des revendications précédentes, caractérisé en ce que l'α-amylase est immobilisée sur un matériau support.

8. Procédé selon la revendication 7, caractérisé en ce que le matériau support utilisé est Eupergit®.
